# EUROPÄISCHE PATENTSCHRIFT

(11) **EP 3 510 340 B1**
(45) Veröffentlichungstag und Bekanntmachung des Hinweises auf die Patenterteilung: **24.03.2021**
(21) Anmeldenummer: 17761272.8
(22) Anmeldetag: 04.09.2017
(51) Int. Cl.: F41F 3/052, F41F 3/08

(54) **HALTEVORRICHTUNG FÜR EIN WAFFENROHR**
HOLDING DEVICE FOR A WEAPON TUBE
DISPOSITIF DE RETENUE D'UN TUBE D'ARME

(30) Priorität: 06.09.2016 DE 102016216864
(43) Veröffentlichungstag der Anmeldung: 17.07.2019
(73) Patentinhaber: thyssenkrupp Marine Systems GmbH, 24143 Kiel (DE); thyssenkrupp AG, 45143 Essen (DE)
(72) Erfinder: RIEGEL, Peter, 23568 Lübeck (DE); DOBRINDT, Dirk, 24222 Schwentinental (DE); TOOBE, Werner, 24159 Kiel (DE)
(74) Vertreter: thyssenkrupp Intellectual Property GmbH
(86) Internationale Anmeldenummer: PCT/EP2017/072121
(87) Internationale Veröffentlichungsnummer: WO 2018/046445

(56) Entgegenhaltungen:
- EP-A2- 1 078 849
- EP-A2- 2 312 256
- DE-A1-102014 015 970
- US-A- 3 097 838

## Beschreibung

Die Erfindung betrifft eine Haltevorrichtung für ein Waffenrohr zur schocksicheren Lagerung einer Waffe in dem Waffenrohr, insbesondere zur schocksicheren Lagerung eines Schwergewichtstorpedos in einem Waffenrohr eines Unterseeboots.

Auf militärischen Schiffen werden Waffenrohre eingesetzt, um Objekte aufzunehmen und auszustoßen. Unter einem Waffenrohr wird ein Rohr mit in erster Näherung rundem Querschnitt verstanden. Typische Waffenrohre sind beispielsweise Torpedorohre oder Ausstoßvorrichtungen für Täuschkörper oder Sonareinrichtungen. Objekte umfassen erfindungsgemäß Waffen wie zum Beispiel Torpedos, Flugkörper, Minen sowie Täuschkörper aber auch Staucontainer. Staucontainer im Sinne dieser Erfindung sind Staucontainer wie diese zum Beispiel in Unterseebooten zur Ausbringung durch Torpedorohre Verwendung finden. Diese Staucontainer dienen dazu, Ausrüstungsgegenstände zum Beispiel für Taucher zu transportieren und im Einsatzfall insbesondere auch unter Wasser aus einem Unterseeboot auszubringen. Um diese Objekte im Waffenrohr stabil zu lagern, weisen die Objekte an der Objekthülle eine Fixiervorrichtung auf. Bei Torpedos wird diese Fixiervorrichtung typischer Weise Haltewarze genannt. Das Waffenrohr weist vorzugsweise im Inneren eine Schiene auf, in der die Fixiervorrichtung laufen kann. Hierdurch wird eine Rotation des Objekts verhindert. Um auch die ungewollte Translation des Objekts zu verhindern, wird die Fixiervorrichtung durch eine Halteklinke fixiert.

Aus der DE 10 2009 020 323 A1 ist eine Waffenmulde zur Aufnahme einer Waffe bekannt, welche eine Halteklinke aufweist.

Aus der DE 10 2015 204 742 ist eine Haltevorrichtung für ein Waffenrohr bekannt, wobei die Halteklinke eine erste und eine zweite Position einnehmen kann.

Aus der US 5,025,744 ist eine wippenförmige Haltevorrichtung zur Fixierung der Fixiervorrichtung bekannt.

Aus der US 5,174,236 ist eine plattenförmige Haltevorrichtung zur Fixierung der Fixiervorrichtung bekannt. Hierbei wird die Haltevorrichtung senkrecht zur Translationsbewegung bewegt und so zwischen dem Ladezustand, dem geschlossenen Zustand und dem Zustand zum Abschuss der Waffe umgeschaltet.

Aus der US 5,690,044 und aus der US 6,367,307 B1 sind einstückige Haltevorrichtungen zur Halterung einer quaderförmigen Fixiervorrichtung bekannt.

Aus der DE 10 2014 015 970 ist eine Halterung zur Fixierung eines Objekts mit einer Fixiervorrichtung in einem Waffenrohr mit einer ersten und einer zweiten Klinke bekannt, wobei die erste und die zweite Klinke unabhängig voneinander beweglich sind.

Beim Einführen einer Waffe in ein Waffenrohr wird die Waffe mit der Fixiervorrichtung gegen eine Halteklinke bewegt und schlägt gegen die Halteklinke und wird dadurch abgebremst. Hierbei ist zu berücksichtigen, dass eine Waffe, beispielsweise ein Torpedo mit 533 mm Durchmesser beispielsweise 1,3 bis 1,9 t wiegt. Auch wenn ein Torpedo langsam in ein Waffenrohr eingeführt wird, ist die in diesem Moment umzuwandelnde kinetische Energie aufgrund des hohen Gewichts groß.

Daher weisen Haltevorrichtung für ein Waffenrohr, beispielsweise eine aus der DE 10 2014 015 970 bekannte Halterung zur Fixierung eines Objekts mit einer Fixiervorrichtung in einem Waffenrohr einen Puffer auf. Beispielsweise ist der Puffer in Form einer elastischen Kunststoffmasse ausgeführt, welche zwischen zwei Metallplatten eingeklebt ist. Der Puffer wirkt derart, dass ein Impuls entlang der Bewegungsrichtung des Objekts durch den Puffer aufgefangen wird.

Solche Puffer benötigen jedoch eine ausreichende Größe, sodass das Waffenrohr deutlich größer als die Waffe sein muss. Insbesondere In Waffenrohren mit einem vergleichsweise engen Innenrohr lassen sich solche Puffer nicht effizient einsetzen.

Ähnlich dem Beladevorgang sieht die Situation im Schockfall aus. Hier treten auch durch das vergleichsweise hohe Gewicht der Waffe große Kräfte auf, welche die beim Beladen auftretenden weit übersteigen können. Im Schockfall kann die Bewegung der Waffe beispielsweise 10 mm übersteigen.

Die üblicherweise aus Gummi bestehenden Puffer weisen materialbedingt eine für den Schockfall ungünstige Kennlinie auf. Erst bei einer starken Stauchung des Materials tritt eine große rückstellende Kraft auf, sodass es im Schockfall zu einer starken Beschleunigung der Masse (der Waffe) kommen kann. Die Bewegung wird dann am Anschlag schlagartig abgebremst, was zu Beschädigungen an der Haltevorrichtung und/oder der Waffe führen kann.

Aufgabe der Erfindung ist es, eine Haltevorrichtung für ein Waffenrohr bereit zu stellen, die diesen extremen Belastungen auch im Schockfall zuverlässig stand hält und eine Beschädigung der Waffe durch zu hohe Spitzenkräfte vermeidet.

Gelöst wird diese Aufgabe durch eine Haltevorrichtung mit den in Anspruch 1 angegebenen Merkmalen, ein Waffenrohr mit den in Anspruch 13 angegebenen Merkmalen und ein Wasserfahrzeug mit den in Anspruch 14 angegebenen Merkmalen. Vorteilhafte Weiterbildungen ergeben sich aus den Unteransprüchen, der nachfolgenden Beschreibung sowie den Zeichnungen.

Die erfindungsgemäße Haltevorrichtung für ein Waffenrohr weist einen Halter, wenigstens eine erste Halteklinke und einen Halteklinkenrahmen auf. Der Halter kann an dem Waffenrohr befestigt werden. Die wenigstens eine erste Halteklinke ist in dem Halteklinkenrahmen angeordnet. Die Haltevorrichtung weist wenigstens eine erste Gasdruckfeder und wenigstens eine zweite Gasdruckfeder auf, wobei die wenigstens eine erste Gasdruckfeder und die wenigstens eine zweite Gasdruckfeder in Längsrichtung der durch die Haltevorrichtung zu haltenden Waffe versetzt angeordnet sind. Die Wirkungsrichtung der wenigstens einen ersten Gasdruckfeder und die Wirkungsrichtung der wenigstens einen zweiten Gasdruckfeder sind entgegengesetzt. Die wenigstens eine erste Gasdruckfeder ist zwischen dem Halter und dem Halteklinkenrahmen angeordnet und die wenigstens eine zweite Gasdruckfeder ist zwischen dem Halter und dem Halteklinkenrahmen angeordnet. Die wenigstens eine erste Gasdruckfeder und die wenigstens eine zweite Gasdruckfeder sind vorzugsweise auf gegenüberliegenden Seiten des Halteklinkenrahmen angeordnet.

Die Wirkungsrichtung einer Gasdruckfeder ist die Richtung, in welche sich bei Verkürzen der Gesamtlänge der Gasdruckfeder der entgegenwirkende Druck dadurch erhöht, dass die Kolbenstange weiter in den Gasraum eingeführt wird und dadurch den Gasdruck im Inneren und damit die resultierende Gegenkraft erhöht.

Gasdruckfedern weisen eine flach ansteigende Kennlinie auf. Hierdurch bewirken diese von Anfang an ein Abbremsen der durch die Schockeinwirkung bewegten Masse. Gleichzeitig wird durch die Erhöhung der Rückstellkraft sichergestellt, dass die Haltevorrichtung anschließend wieder in die Ruhelage zurückkehrt.

Vorzugsweise kann der Halteklinkenrahmen zwischen der wenigstens einen ersten Gasdruckfeder und der wenigstens einen zweiten Gasdruckfeder spielfrei aber ohne Vorspannung eingebaut sein.

In einer weiteren Ausführungsform der Erfindung sind wenigstens eine erste Gasdruckfeder um wenigstens 10 mm, bevorzugt um wenigstens 25 mm, weiter bevorzugt um wenigstens 35 mm, besonders bevorzugt um wenigstens 60 mm komprimierbar und die wenigstens eine zweite Gasdruckfeder um wenigstens 10 mm, bevorzugt um wenigstens 25 mm, weiter bevorzugt um wenigstens 35 mm, besonders bevorzugt um wenigstens 60 mm komprimierbar.

In einer weiteren Ausführungsform der Erfindung sind die wenigstens eine erste Gasdruckfeder um höchstens 125 mm, bevorzugt um höchstens 90 mm, besonders bevorzugt um höchstens 70 mm komprimierbar und die wenigstens eine zweite Gasdruckfeder um höchstens 125 mm, bevorzugt um höchstens 90 mm, besonders bevorzugt um höchstens 70 mm komprimierbar.

In einer weiteren Ausführungsform der Erfindung sind die wenigstens eine erste Gasdruckfeder um wenigstens 10 mm, bevorzugt um wenigstens 25 mm, weiter bevorzugt um wenigstens 35 mm und um höchstens 60 mm, bevorzugt um höchstens 50 mm, besonders bevorzugt um höchstens 40 mm komprimierbar und die wenigstens eine zweite Gasdruckfeder um wenigstens 10 mm, bevorzugt um wenigstens 25 mm, weiter bevorzugt um wenigstens 35 mm und um höchstens 60 mm, bevorzugt um höchstens 50 mm, besonders bevorzugt um höchstens 40 mm komprimierbar.

In einer weiteren Ausführungsform der Erfindung weist die Haltevorrichtung wenigstens zwei erste Gasdruckfedern auf, wobei die wenigstens zwei ersten Gasdruckfedern parallel nebeneinander angeordnet sind. Durch die Parallelschaltung zweier Gasdruckfedern (oder auch mehr als zweier Gasdruckfedern) können kleinere Gasdruckfedern verwendet werden. Zusätzlich können durch die seitliche Verteilung der wenigstens zwei parallel angeordneten Gasdruckfedern Scherkräfte vermeiden oder wenigstens reduziert werden.

In einer weiteren Ausführungsform der Erfindung weist die Haltevorrichtung wenigstens zwei zweite Gasdruckfedern auf, wobei die wenigstens zwei zweiten Gasdruckfedern parallel nebeneinander angeordnet sind. Durch die Parallelschaltung zweier Gasdruckfedern (oder auch mehr als zweier Gasdruckfedern) können kleinere Gasdruckfedern verwendet werden. Zusätzlich können durch die seitliche Verteilung der wenigstens zwei parallel angeordneten Gasdruckfedern Scherkräfte vermeiden oder wenigstens reduziert werden.

Besonders bevorzugt weist die Haltevorrichtung wenigstens zwei erste Gasdruckfedern und zwei zweite Gasdruckfedern auf, wobei die wenigstens zwei ersten Gasdruckfedern parallel nebeneinander angeordnet sind, wobei die wenigstens zwei zweiten Gasdruckfedern parallel nebeneinander angeordnet sind.

In einer weiteren Ausführungsform der Erfindung sind die wenigstens eine erste Gasdruckfeder und die wenigstens eine zweite Gasdruckfeder vorgespannt.

In einer weiteren Ausführungsform der Erfindung weist die wenigstens eine erste Gasdruckfeder einen ersten Kolben, eine erste Kolbenstange und einen ersten Kolbenzylinder auf, wobei der erste Kolbenzylinder mit dem Halter verbunden und die erste Kolbenstange mit dem Halteklinkenrahmen nicht verbunden ist. Die wenigstens eine zweite Gasdruckfeder weist einen zweiten Kolben, eine zweiten Kolbenstange und einen zweiten Kolbenzylinder auf, wobei der zweite Kolbenzylinder mit dem Halter verbunden ist und die zweite Kolbenstange mit dem Halteklinkenrahmen nicht verbunden ist. Da die erste Kolbenstange und die zweite Kolbenstange nicht mit dem Halteklinkenrahmen verbunden sind, muss die jeweils nicht komprimierte Gasdruckfeder nicht dem Halteklinkenrahmen folgen und wird nicht gestreckt.

In einer weiteren alternativen Ausführungsform der Erfindung weist die wenigstens eine erste Gasdruckfeder einen ersten Kolben, eine erste Kolbenstange und einen ersten Kolbenzylinder auf, wobei der erste Kolbenzylinder mit dem Halteklinkenrahmen verbunden und die erste Kolbenstange mit dem Halter nicht verbunden ist. Die wenigstens eine zweite Gasdruckfeder weist einen zweiten Kolben, eine zweiten Kolbenstange und einen zweiten Kolbenzylinder auf, wobei der zweite Kolbenzylinder mit dem Halteklinkenrahmen verbunden ist und die zweite Kolbenstange mit dem Halter nicht verbunden ist. Da der erste Kolbenzylinder und der zweite Kolbenzylinder nicht mit dem Halteklinkenrahmen verbunden sind, muss die jeweils nicht komprimierte Gasdruckfeder nicht dem Halteklinkenrahmen folgen und wird nicht gestreckt.

In einer weiteren alternativen Ausführungsform der Erfindung weist die wenigstens eine erste Gasdruckfeder einen ersten Kolben, eine erste Kolbenstange und einen ersten Kolbenzylinder auf, wobei der erste Kolbenzylinder mit dem Halter verbunden und die erste Kolbenstange mit dem Halteklinkenrahmen verbunden ist. Die wenigstens eine zweite Gasdruckfeder weist einen zweiten Kolben, eine zweiten Kolbenstange und einen zweiten Kolbenzylinder auf, wobei der zweite Kolbenzylinder mit dem Halter verbunden ist und die zweite Kolbenstange mit dem Halteklinkenrahmen verbunden ist.

In einer weiteren alternativen Ausführungsform der Erfindung weist die wenigstens eine erste Gasdruckfeder einen ersten Kolben, eine erste Kolbenstange und einen ersten Kolbenzylinder auf, wobei der erste Kolbenzylinder mit dem Halteklinkenrahmen verbunden und die erste Kolbenstange mit dem Halter verbunden ist. Die wenigstens eine zweite Gasdruckfeder weist einen zweiten Kolben, eine zweiten Kolbenstange und einen zweiten Kolbenzylinder auf, wobei der zweite Kolbenzylinder mit dem Halteklinkenrahmen verbunden ist und die zweite Kolbenstange mit dem Halter verbunden ist.

In einer weiteren Ausführungsform der Erfindung weist die Haltevorrichtung wenigstens einen ersten Stoßdämpfer und wenigstens einen zweiten Stoßdämpfer auf, wobei der wenigstens eine erste Stoßdämpfer und die wenigstens eine erste Gasdruckfeder parallel nebeneinander angeordnet sind und wobei der wenigstens eine zweite Stoßdämpfer und die wenigstens eine zweite Gasdruckfeder parallel nebeneinander angeordnet sind. Stoßdämpfer haben in erster Näherung eine gleichbleibende Bremskraft. Der Einsatz von Stoßdämpfern ist insbesondere sinnvoll, um den Schockweg zu verkürzen und so die gesamte Baulänge zu verringern.

In einer weiteren Ausführungsform der Erfindung sind der wenigstens eine erste Stoßdämpfer mit dem Halter verbunden und vom Halteklinkenrahmen beabstandet und der wenigstens eine zweite Stoßdämpfer mit dem Halter verbunden und vom Halteklinkenrahmen beabstandet. Vorzugsweise besteht ein geringer Spalt zwischen dem wenigstens einen ersten Stoßdämpfer und dem Halteklinkenrahmen sowie zwischen dem wenigstens einen zweiten Stoßdämpfer und dem Halteklinkenrahmen. Hierdurch wird eine dauerhafte Vorspannung der Schockdämpfer verhindert, welche zu einer Verschlechterung der Energieaufnahme führen würde. Zur Vermeidung von Geräuschen kann der Spalt auch mit einem kompressiblen Material, beispielsweise Schaum oder Gummi, gefüllt sein, um eine Geräuschentwicklung beim Anschlag zu vermeiden.

In einer weiteren Ausführungsform der Erfindung sind der wenigstens eine erste Stoßdämpfer und der wenigstens eine zweite Stoßdämpfer ölgefüllt.

In einer weiteren Ausführungsform der Erfindung weist der Halter und/oder der Halteklinkenrahmen zusätzlich wenigstens einen Puffer auf.

In einer weiteren Ausführungsform der Erfindung weist die wenigstens eine erste Gasdruckfeder einen ersten Außenmantel auf, wobei der erste Außenmantel ein erstes Gewinde aufweist. Die wenigstens eine erste Gasdruckfeder ist über das erste Gewinde mit dem Halter verbunden. Die wenigstens eine zweite Gasdruckfeder weist einen zweiten Außenmantel auf, wobei der zweite Außenmantel ein zweites Gewinde aufweist. Die wenigstens eine zweite Gasdruckfeder ist über das zweite Gewinde mit dem Halter verbunden.

In einer weiteren Ausführungsform der Erfindung weist der Halter eine rahmenförmige Form auf, wobei der Halteklinkenrahmen innerhalb des rahmenförmigen Halters angeordnet ist. Der rahmenförmige Halter weist eine Führung zur Führung des Halteklinkenrahmens für eine Bewegung in Längsrichtung der durch die Haltevorrichtung zu haltenden Waffe auf. Besonders bevorzugt handelt es sich um eine seitliche Führung. Durch die Führung kann eine exakte Ausrichtung des Halteklinkenrahmens und damit der wenigstens einen ersten Halteklinke erreicht werden.

In einem weiteren Aspekt betrifft die Erfindung ein Waffenrohr mit einer erfindungsgemäßen Haltevorrichtung.

In einem weiteren Aspekt betrifft die Erfindung ein Wasserfahrzeug mit einem Waffenrohr mit einer erfindungsgemäßen Haltevorrichtung.

In einer weiteren Ausführungsform der Erfindung ist das Wasserfahrzeug ein Unterseeboot.

Nachfolgend ist die erfindungsgemäße Haltevorrichtung anhand von in den Zeichnungen dargestellten Ausführungsbeispielen näher erläutert.
- Fig. 1: perspektivische Ansicht einer ersten Haltevorrichtung
- Fig. 2: schematische Aufsicht auf eine zweite Haltevorrichtung

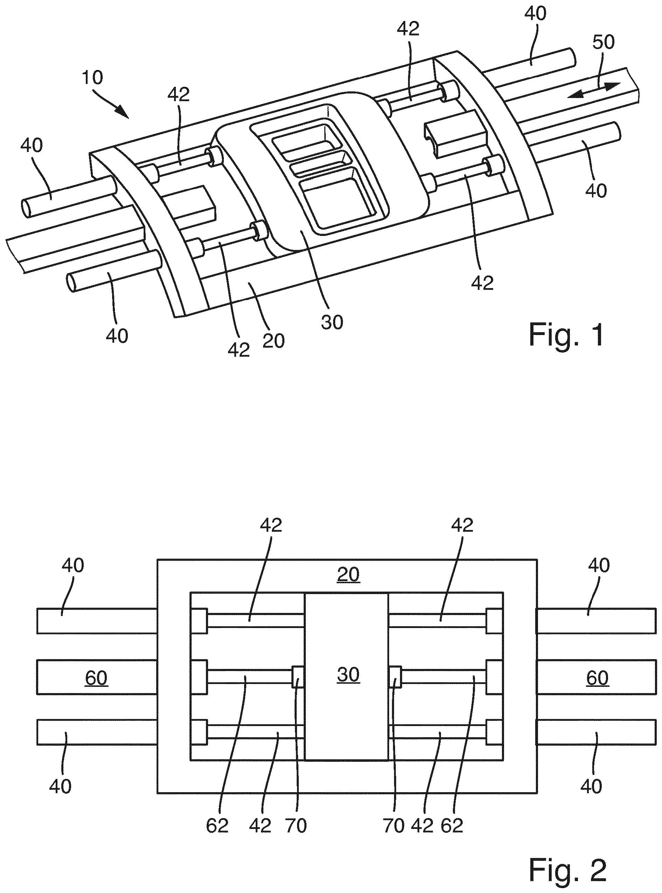

In Fig. 1 ist eine perspektivische Ansicht einer ersten Haltevorrichtung 10 gezeigt. Die Haltevorrichtung 10 weist einen Halter 20 auf, welcher in einem Waffenrohr befestigt werden kann. Innerhalb des Halters 20 ist ein Halteklinkenrahmen 30 angeordnet, wobei der Halteklinkerahmen 30 über vier Gasdruckfedern 40 mit dem Halter 20 verbunden ist. Hierbei sind die vier Gasdruckfedern 40 so angeordnet, dass diese mit der Kolbenstange 20 am Halteklinkenrahmen 30 und mit dem Kolbenzylinder am Halter 20 befestigt sind. Hierbei sind jeweils zwei Gasdruckfedern 40 parallel zueinander angeordnet und die beiden Gruppen von je zwei Gasdruckfedern 40 sind entlang der Längsrichtung 50 versetzt und mit entgegengesetzter Wirkrichtung angeordnet. Hierdurch entsteht eine in beide Richtungen symmetrische Federwirkung.

Fig. 2 zeigt eine schematische Aufsicht auf eine zweite Haltevorrichtung 10, welche zusätzlich zu den in Fig. 1 gezeigten Merkmalen zwei Stoßdämpfer 60 aufweist, wobei die Stoßdämpferkolbenstangen 62 über einen Spalt 70, beispielsweise aus einem Polyurethanschaumstoff, mit dem Halteklinkenrahmen 30 verbunden sind. Durch die zusätzlichen Stoßdämpfer 60 kann der Federweg und damit die Baugröße reduziert werden.

### Bezugszeichen

- 10: Haltevorrichtung
- 20: Halter
- 30: Halteklinkenrahmen
- 40: Gasdruckfeder
- 42: Kolbenstange
- 50: Längsrichtung
- 60: Stoßdämpfer
- 62: Stoßdämpferkolbenstange
- 70: Spalt

## Patentansprüche

1. Haltevorrichtung (10) für ein Waffenrohr mit einem Halter (20), wenigstens einer ersten Halteklinke und einem Halteklinkenrahmen (30), wobei der Halter (20) am Waffenrohr befestigt werden kann, wobei die wenigstens eine erste Halteklinke in dem Halteklinkenrahmen (30) angeordnet ist, **dadurch gekennzeichnet, dass** die Haltevorrichtung (10) wenigstens eine erste Gasdruckfeder (40) und wenigstens eine zweite Gasdruckfeder (40) aufweist, wobei die wenigstens eine erste Gasdruckfeder (40) und die wenigstens eine zweite Gasdruckfeder (40) in Längsrichtung (50) der durch die Haltevorrichtung (10) zu haltenden Waffe versetzt angeordnet sind, wobei die Wirkungsrichtung der wenigstens einen ersten Gasdruckfeder (40) und die Wirkungsrichtung der wenigstens einen zweiten Gasdruckfeder (40) entgegengesetzt sind, wobei die wenigstens eine erste Gasdruckfeder (40) zwischen dem Halter (20) und dem Halteklinkenrahmen (30) angeordnet ist, wobei die wenigstens eine zweite Gasdruckfeder (40) zwischen dem Halter (20) und dem Halteklinkenrahmen (30) angeordnet ist.

2. Haltevorrichtung (10) nach Anspruch 1, **dadurch gekennzeichnet, dass** die wenigstens eine erste Gasdruckfeder (40) um wenigstens 10 mm, bevorzugt um wenigstens 25 mm, weiter bevorzugt um wenigstens 35 mm, besonders bevorzugt um wenigstens 60 mm komprimierbar ist und die wenigstens eine zweite Gasdruckfeder (40) um wenigstens 10 mm, bevorzugt um wenigstens 25 mm, weiter bevorzugt um wenigstens 35 mm, besonders bevorzugt um wenigstens 60 mm komprimierbar ist.

3. Haltevorrichtung (10) nach einem der vorstehenden Ansprüche, **dadurch gekennzeichnet, dass** die wenigstens eine erste Gasdruckfeder (40) um höchstens 125 mm, bevorzugt um höchstens 90 mm, besonders bevorzugt um höchstens 70 mm komprimierbar ist und die wenigstens eine zweite Gasdruckfeder (40) um höchstens 125 mm, bevorzugt um höchstens 90 mm, besonders bevorzugt um höchstens 70 mm komprimierbar ist.

4. Haltevorrichtung (10) nach einem der vorstehenden Ansprüche, **dadurch gekennzeichnet, dass** die Haltevorrichtung (10) wenigstens zwei erste Gasdruckfedern (40) aufweist, wobei die wenigstens zwei ersten Gasdruckfedern (40) parallel nebeneinander angeordnet sind.

5. Haltevorrichtung (10) nach einem der vorstehenden Ansprüche, **dadurch gekennzeichnet, dass** die Haltevorrichtung (10) wenigstens zwei zweite Gasdruckfedern (40) aufweist, wobei die wenigstens zwei zweiten Gasdruckfedern (40) parallel nebeneinander angeordnet sind.

6. Haltevorrichtung (10) nach einem der vorstehenden Ansprüche, **dadurch gekennzeichnet, dass** die wenigstens eine erste Gasdruckfeder (40) und die wenigstens eine zweite Gasdruckfeder (40) vorgespannt sind.

7. Haltevorrichtung (10) nach einem der vorstehenden Ansprüche, **dadurch gekennzeichnet, dass** die wenigstens eine erste Gasdruckfeder (40) einen ersten Kolben, eine erste Kolbenstange (42) und einen ersten Kolbenzylinder aufweist, wobei der erste Kolbenzylinder mit dem Halter (20) verbunden ist, wobei die erste Kolbenstange (42) mit dem Halteklinkenrahmen (30) nicht verbunden ist, die wenigstens eine zweite Gasdruckfeder (40) einen zweiten Kolben, eine zweiten Kolbenstange (42) und einen zweiten Kolbenzylinder aufweist, wobei der zweite Kolbenzylinder mit dem Halter (20) verbunden ist, wobei die zweite Kolbenstange (42) mit dem Halteklinkenrahmen (30) nicht verbunden ist.

8. Haltevorrichtung (10) nach einem der vorstehenden Ansprüche, **dadurch gekennzeichnet, dass** die Haltevorrichtung (10) wenigstens einen ersten Stoßdämpfer (60) und wenigstens einen zweiten Stoßdämpfer (60) aufweist, wobei der wenigstens eine erste Stoßdämpfer (60) und die wenigstens eine erste Gasdruckfeder (40) parallel nebeneinander angeordnet sind, wobei der wenigstens eine zweite Stoßdämpfer (60) und die wenigstens eine zweite Gasdruckfeder (40) parallel nebeneinander angeordnet sind.

9. Haltevorrichtung (10) Anspruch 8, **dadurch gekennzeichnet, dass** der wenigstens eine erste Stoßdämpfer (60) mit dem Halter (20) verbunden und vom Halteklinkenrahmen (30) beabstandet ist und der wenigstens eine zweite Stoßdämpfer (60) mit dem Halter (20) verbunden und vom Halteklinkenrahmen (30) beabstandet ist.

10. Haltevorrichtung (10) nach einem der Ansprüche 8 oder 9, **dadurch gekennzeichnet, dass** der wenigstens eine erste Stoßdämpfer (60) und der wenigstens eine zweite Stoßdämpfer (60) ölgefüllt sind.

11. Haltevorrichtung (10) nach einem der vorstehenden Ansprüche, **dadurch gekennzeichnet, dass** der Halter (20) und/oder der Halteklinkenrahmen (30) zusätzlich wenigstens einen Puffer aufweist.

12. Haltevorrichtung (10) nach einem der vorstehenden Ansprüche, **dadurch gekennzeichnet, dass** die wenigstens eine erste Gasdruckfeder (40) einen ersten Außenmantel aufweist, wobei der erste Außenmantel ein erstes Gewinde aufweist, wobei die wenigstens eine erste Gasdruckfeder (40) über das erste Gewinde mit dem Halter (20) verbunden ist, wobei die wenigstens eine zweite Gasdruckfeder (40) einen zweiten Außenmantel aufweist, wobei der zweite Außenmantel ein zweites Gewinde aufweist, wobei die wenigstens eine zweite Gasdruckfeder (40) über das zweite Gewinde mit dem Halter (20) verbunden ist.

13. Waffenrohr mit einer Haltevorrichtung (10) nach einem der Ansprüche 1 bis 12.

14. Wasserfahrzeug mit einem Waffenrohr mit einer Haltevorrichtung (10) nach einem der Ansprüche 1 bis 12.

15. Wasserfahrzeug nach Anspruch 14, **dadurch gekennzeichnet, dass** das Wasserfahrzeug ein Unterseeboot ist.

## Claims

1. A holding device (10) for a weapon barrel having a holder (20), at least one first holding latch and a holding latch frame (30), wherein the holder (20) may be fastened to the weapon barrel, wherein the at least one first holding latch is arranged in the holding latch frame (30), **characterized in that** the holding device (10) has at least one first gas pressure spring (40) and at least one second gas pressure spring (40), wherein the at least one first gas pressure spring (40) and the at least one second gas pressure spring (40) are arranged offset in the longitudinal direction (50) of the weapon to be held by the holding device (10), wherein the direction of action of the at least one first gas pressure spring (40) and the direction of action of the at least one second gas pressure spring (40) oppose one another, wherein the at least one first gas pressure spring (40) is arranged between the holder (20) and the holding latch frame (30), wherein the at least one second gas pressure spring (40) is arranged between the holder (20) and the holding latch frame (30).

2. The holding device (10) as claimed in claim 1, **characterized in that** the at least one first gas pressure spring (40) can be compressed by at least 10 mm, preferably by at least 25 mm, more preferably by at least 35 mm, particularly preferably by at least 60 mm, and the at least one second gas pressure spring (40) can be compressed by at least 10 mm, preferably by at least 25 mm, more preferably by at least 35 mm, particularly preferably by at least 60 mm.

3. The holding device (10) as claimed in one of the preceding claims, **characterized in that** the at least one first gas pressure spring (40) can be compressed by at most 125 mm, preferably by at most 90 mm, particularly preferably by at most 70 mm, and the at least one second gas pressure spring (40) can be compressed by at most 125 mm, preferably by at most 90 mm, particularly preferably by at most 70 mm.

4. The holding device (10) as claimed in one of the preceding claims, **characterized in that** the holding device (10) has at least two first gas pressure springs (40), wherein the at least two first gas pressure springs (40) are arranged parallel to one another.

5. The holding device (10) as claimed in one of the preceding claims, **characterized in that** the holding device (10) has at least two second gas pressure springs (40), wherein the at least two second gas pressure springs (40) are arranged parallel to one another.

6. The holding device (10) as claimed in one of the preceding claims, **characterized in that** the at least one first gas pressure spring (40) and the at least one second gas pressure spring (40) are pretensioned.

7. The holding device (10) as claimed in one of the preceding claims, **characterized in that** the at least one first gas pressure spring (40) has a first piston, a first piston rod (42) and a first piston cylinder, wherein the first piston cylinder is connected to the holder (20), wherein the first piston rod (42) is not connected to the holding latch frame (30), the at least one second gas pressure spring (40) has a second piston, a second piston rod (42), and a second piston cylinder, wherein the second piston cylinder is connected to the holder (20), wherein the second piston rod (42) is not connected to the holding latch frame (30).

8. The holding device (10) as claimed in one of the preceding claims, **characterized in that** the holding device (10) has at least one first shock absorber (60) and at least one second shock absorber (60), wherein the at least one first shock absorber (60) and the at least one first gas pressure spring (40) are arranged parallel alongside one another, wherein the at least one second shock absorber (60) and the at least one second gas pressure spring (40) are arranged parallel alongside one another.

9. The holding device (10) as claimed in claim 8, **characterized in that** the at least one first shock absorber (60) is connected to the holder (20) and spaced apart from the holding latch frame (30) and the at least one second shock absorber (60) is connected to the holder (20) and spaced apart from the holding latch frame (30).

10. The holding device (10) as claimed in one of claims 8 or 9, **characterized in that** the at least one first shock absorber (60) and the at least one second shock absorber (60) are oil-filled.

11. The holding device (10) as claimed in one of the preceding claims, **characterized in that** the holder (20) and/or the holder latch frame (30) exhibits in addition at least one buffer.

12. The holding device (10) as claimed in one of the preceding claims, **characterized in that** the at least one first gas pressure spring (40) has a first outer casing, wherein the first outer casing has a first thread, wherein the at least one first gas pressure spring (40) is connected to the holder (20) via the first thread, wherein the at least one second gas pressure spring (40) has a second outer casing, wherein the second outer casing has a second thread, wherein the at least one second gas pressure spring (40) is connected to the holder (20) via the second thread.

13. A weapon barrel with a holding device (10) as claimed in one of claims 1 to 12.

14. A watercraft with a weapon barrel with a holding device (10) as claimed in one of claims 1 to 12.

15. The watercraft as claimed in claim 14, **characterized in that** the watercraft is a submarine.

## Revendications

1. Dispositif de retenue (10) pour un canon d'arme à feu, muni d'un support (20), d'au moins un premier cliquet de retenue et d'un cadre de cliquet de retenue (30), le support (20) pouvant être fixé sur le canon d'arme à feu, l'au moins un premier cliquet de retenue étant agencé dans le cadre de cliquet de retenue (30), **caractérisé en ce que** le dispositif de retenue (10) comprend au moins un premier ressort pneumatique (40) et au moins un deuxième ressort pneumatique (40), l'au moins un premier ressort pneumatique (40) et l'au moins un deuxième ressort pneumatique (40) étant agencés en décalage dans la direction longitudinale (50) de l'arme à feu devant être supportée par le dispositif de retenue (10), la direction d'action de l'au moins un premier ressort pneumatique (40) et la direction d'action de l'au moins un deuxième ressort pneumatique (40) étant opposées, l'au moins un premier ressort pneumatique (40) étant agencé entre le support (20) et le cadre de cliquet de retenue (30), l'au moins un deuxième ressort pneumatique (40) étant agencé entre le support (20) et le cadre de cliquet de retenue (30).

2. Dispositif de retenue (10) selon la revendication 1, **caractérisé en ce que** l'au moins un premier ressort pneumatique (40) est comprimable d'au moins 10 mm, de préférence d'au moins 25 mm, de manière davantage préférée d'au moins 35 mm, de manière particulièrement préférée d'au moins 60 mm, et l'au moins un deuxième ressort pneumatique (40) est comprimable d'au moins 10 mm, de préférence d'au moins 25 mm, de manière davantage préférée d'au moins 35 mm, de manière particulièrement préférée d'au moins 60 mm.

3. Dispositif de retenue (10) selon l'une quelconque des revendications précédentes, **caractérisé en ce que** l'au moins un premier ressort pneumatique (40) est comprimable d'au plus 125 mm, de préférence d'au plus 90 mm, de manière particulièrement préférée d'au plus 70 mm, et l'au moins un deuxième ressort pneumatique (40) est comprimable d'au plus 125 mm, de préférence d'au plus 90 mm, de manière particulièrement préférée d'au plus 70 mm.

4. Dispositif de retenue (10) selon l'une quelconque des revendications précédentes, **caractérisé en ce que** le dispositif de retenue (10) comprend au moins deux premiers ressorts pneumatiques (40), les au moins deux premiers ressorts pneumatiques (40) étant agencés en parallèle l'un à côté de l'autre.

5. Dispositif de retenue (10) selon l'une quelconque des revendications précédentes, **caractérisé en ce que** le dispositif de retenue (10) comprend au moins deux deuxièmes ressorts pneumatiques (40), les au moins deux deuxièmes ressorts pneumatiques (40) étant agencés en parallèle l'un à côté de l'autre.

6. Dispositif de retenue (10) selon l'une quelconque des revendications précédentes, **caractérisé en ce que** l'au moins un premier ressort pneumatique (40) et l'au moins un deuxième ressort pneumatique (40) sont précontraints.

7. Dispositif de retenue (10) selon l'une quelconque des revendications précédentes, **caractérisé en ce que** l'au moins un premier ressort pneumatique (40) comprend un premier piston, une première tige de piston (42) et un premier cylindre de piston, le premier cylindre de piston étant relié avec le support (20), la première tige de piston (42) n'étant pas reliée avec le cadre de cliquet de retenue (30), l'au moins un deuxième ressort pneumatique (40) comprend un deuxième piston, une deuxième tige de piston (42) et un deuxième cylindre de piston, le deuxième cylindre de piston étant relié avec le support (20), la deuxième tige de piston (42) n'étant pas reliée avec le cadre de cliquet de retenue (30) .

8. Dispositif de retenue (10) selon l'une quelconque des revendications précédentes, **caractérisé en ce que** le dispositif de retenue (10) comprend au moins un premier amortisseur de choc (60) et au moins un deuxième amortisseur de choc (60), l'au moins un premier amortisseur de choc (60) et l'au moins un premier ressort pneumatique (40) étant agencés en parallèle l'un à côté de l'autre, l'au moins deuxième amortisseur de choc (60) et l'au moins un deuxième ressort pneumatique (40) étant agencés en parallèle l'un à côté de l'autre.

9. Dispositif de retenue (10) selon la revendication 8, **caractérisé en ce que** l'au moins un premier amortisseur de choc (60) est relié avec le support (20) et espacé du cadre de cliquet de retenue (30) et l'au moins un deuxième amortisseur de choc (60) est relié avec le support (20) et espacé du cadre de cliquet de retenue (30).

10. Dispositif de retenue (10) selon l'une quelconque des revendications 8 ou 9, **caractérisé en ce que** l'au moins un premier amortisseur de choc (60) et l'au moins un deuxième amortisseur de choc (60) sont remplis d'huile.

11. Dispositif de retenue (10) selon l'une quelconque des revendications précédentes, **caractérisé en ce que** le support (20) et/ou le cadre de cliquet de retenue (30) comprennent en outre au moins un tampon.

12. Dispositif de retenue (10) selon l'une quelconque des revendications précédentes, **caractérisé en ce que** l'au moins un premier ressort pneumatique (40) comprend une première enveloppe extérieure, la première enveloppe extérieure comprenant un premier filetage, l'au moins un premier ressort pneumatique (40) étant relié par l'intermédiaire du premier filetage avec le support (20), l'au moins un deuxième ressort pneumatique (40) comprenant une deuxième enveloppe extérieure, la deuxième enveloppe extérieure comprenant un deuxième filetage, l'au moins un deuxième ressort pneumatique (40) étant relié par l'intermédiaire du deuxième filetage avec le support (20).

13. Canon d'arme à feu muni d'un dispositif de retenue (10) selon l'une quelconque des revendications 1 à 12.

14. Embarcation munie d'un canon d'arme à feu muni d'un dispositif de retenue (10) selon l'une quelconque des revendications 1 à 12.

15. Embarcation selon la revendication 14, **caractérisée en ce que** l'embarcation est un sous-marin.
